# EUROPEAN PATENT APPLICATION

(11) **EP 1 329 820 A2**
(43) Date of publication of application: **23.07.2003**
(21) Application number: 02259034.3
(22) Date of filing: 31.12.2002
(51) Int. Cl.: G06F 17/30

(54) **System and method for generating a publication based on ephemeral interests**

(30) Priority: 17.01.2002 US 51778
(71) Applicant: Hewlett-Packard Company, Palo Alto, CA 94304 (US)
(72) Inventor: Beckman, Orhan Earl, Camas, WA 98607 (US); Farrell, Jennifer Leigh, Vancouver, WA 98683 (US)
(74) Representative: Jackson, Richard Eric

(57) **Abstract**

Various systems, methods, and programs embodied on computer-readable mediums are provided to generate a publication (163). One such method comprises the inputting an ephemeral interest (333) into a client (103), wherein the ephemeral interest (333) is of use in identifying at least one content item (213) to be included in the publication (163), requesting the publication (163) based at least in part upon the ephemeral interest (333) from a publication system (186), and, printing out the publication (163) received from the publication system (186), the publication (163) including the at least one content item (213).

## Description

### CROSS REFERENCE TO RELATED CASES

This application is related to United States Patent Application entitled "Document Delivery System for Automatically Printing a Document on a Printing Device", Serial Number 09/325,040, filed on June 7, 1999, and United States Patent Application entitled "System and Method for Generating and Distributing a Publication", Serial Number 09/915,982, filed on July 25, 2001.

### BACKGROUND OF THE INVENTION

In more recent years, a new type of publication has emerged, namely, the electronic publication. Readers of these publications typically sign onto the Internet through their computer, and read the publications online. Some of these publications allow users to state personal preferences on what type of material they want to read. Often, these personalized electronic publications include advertising, usually in the form of a banner ad that is placed on the top of the screen.

While these electronic publications have been an interesting development in the distribution of information, they still represent a tiny fraction of the information that is published using physical print media such as paper, *etc*. Many readers of electronic publications complain that they are very difficult to read, especially for long periods of time. Also, while some of a reader's personal preferences can remain constant over a long period of time, others may change frequently and thus inappropriate personalization can result. While it might be convenient for a reader to sign onto the Internet to look at a news web site for a brief summary of late breaking news, this reader would most likely only spend a few minutes at the site, and would likely still subscribe to the more traditional print media such as Newsweek or the Washington Post. They would also likely spend significantly more time reading the more traditional printed publication than they would the electronic publication, and correspondingly, spend more time being exposed to the ads in the traditional printed publication. In addition, in many situations, readers are located in places where they do not have access to computer systems with which they might be able to view online publications.

### BRIEF DESCRIPTION OF THE SEVERAL VIEWS OF THE DRAWINGS

The invention can be understood with reference to the following drawings. The components in the drawings are not necessarily to scale. Also, in the drawings, like reference numerals designate corresponding parts throughout the several views.
FIG. 1 is a block diagram of a publishing network according to an embodiment of the present invention;
FIG. 2 is a drawing of a first graphical user interface employed to enter or modify a user profile employed in a publishing server of the publishing network of FIG. 1;
FIG. 3 is a drawing of a second graphical user interface employed to provide feedback for one or more content items in a publication generated by a publishing server of the publishing network of FIG. 1;
FIG. 4 is a drawing of a publication request transmitted by a client to a publishing server in the publication network of FIG. 1;
FIG. 5 is a flow chart of a point of publication system executed in a client of the publishing network to create a printed publication;
FIG. 6 is a flow chart of the publishing server executed in a publishing server in the publishing network of FIG. 1;
FIG. 7 is a flow chart of a user profile maintenance component of a publishing system executed in a publishing server of the publishing network of FIG. 1;
FIG. 8 is a flow chart of a content item screening component of the publishing system executed in a publishing server of the publishing network of FIG. 1; and
FIG. 9 is a flow chart of a feedback system executed in the publishing server executed in a publishing server of the publishing network of FIG. 1.

### DETAILED DESCRIPTION OF THE INVENTION

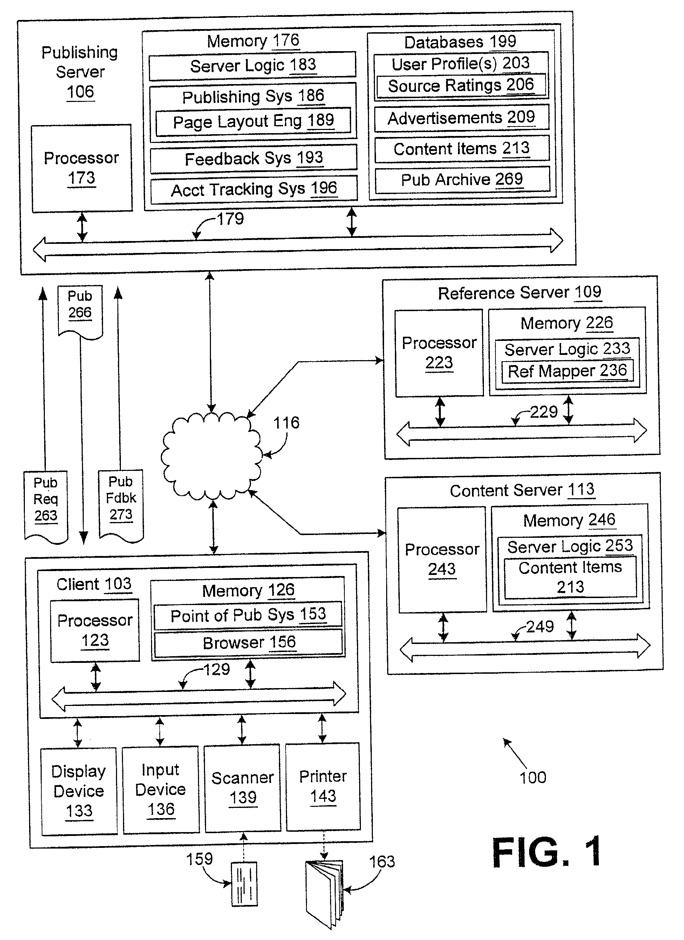

With reference to FIG. 1, shown is a publishing network 100 according to an embodiment of the present invention. The publishing network 100 includes a client 103, a publishing server 106 a reference server 109, and a content server 113, all of which are coupled to a network cloud 116. The network cloud 116 represents, for example, the Internet, intranets, wide area networks (WANs), local area networks, wireless networks, or other suitable networks, *etc*.*,* or any combination of two or more such networks.

The client 103 may be, for example, a computer system or other device with like capability. In this respect, the client 103 includes a processor circuit with a processor 123 and a memory 126, both of which are coupled to a local interface 129. The local interface 129 may be, for example, a data bus with an accompanying control/address bus as can be appreciated by those with ordinary skill in the art. The client 103 also includes a display device 133, one or more input devices 136, a scanner 139, and a printer 143.

The display device 133 maybe, for example, cathode ray tubes (CRTs), liquid crystal display screens, gas plasma-based flat panel displays, or other types of display devices, *etc*. The input devices 136 may be, for example, a keyboard, keypad, touch pad, touch screen, microphone, mouse, joystick, or one or more push buttons, or other input devices, *etc*. Also, the client 103 may include various output devices (not shown) beyond the display device 133 and the printer 143 such as, for example, indicator lights, speakers, and other output devices. The display devices 133, input device 136, scanner 139, printer 143 and any output devices are all coupled to the local interface 129 through appropriate interface circuits such as video cards, input/output cards, or other circuits as can be appreciated by those with ordinary skill in the art.

The client 103 also includes a "point of publication" system 153 and a browser 156 that are stored in the memory 126 and are executable by the processor 123. The point of publication system 153 is executed on the client 103 in order to print a personalized publication based at least in part upon ephemeral interests as will be discussed. The browser 156 is employed to access various network pages that are stored on respective servers coupled to the network cloud 116 such as the publishing server 106, reference server 109, and content server 113. The network pages may be, for example, web pages embodied in Hypertext Markup Language (HTML), Extensible Markup Language (XML), or other markup language. The client 103 may employ the scanner 139 to scan in a document 159 that includes the ephemeral interests that are used to generate a printed publication 163 or the ephemeral interests may be entered into the client using an appropriate input device 136 as will be discussed.

The publishing server 106 includes a processing circuit with a processor 173 and a memory 176, both of which are coupied to a local interface 179. The local interface may be, for example, a data bus with an accompanying control/address bus as can be appreciated by those with ordinary skill in the art. In this respect, the publishing server 106 may be, for example, a computer system or other system with like capability. The publishing server 106 may include all of the peripheral devices as was described with respect to the client 103 above.

The publishing server 106 also includes a number of components that are stored on the memory 176 and are executable by the processor 173. These components include server logic 183 that is executed by the processor 173 to interact with the client 103 in providing access to the various other components stored on the memory 176, etc. The server logic 183 may be, for example, a Hypertext Transfer Protocol (HTTP) server that serves up HTML pages and/or associated files and scripts when requested by the browser 156. Other components stored on the memory 176 may comprise, for example, a publishing system 186 that includes a page layout engine 189, a feedback system 193, a number of databases 199, and an account tracking system 196. Stored in the databases 199 are a number of user profiles 203, where each user profile 203 includes a number of source ratings 206. The user profiles 203 include information about a user such as, for example, their biographical information, interests and hobbies, *etc*.

The source ratings 206 relate to content item sources for which the user may or may not have a preference. Specifically, a user's preferences for a particular content source such as a specific author, columnist, artist or other source of content are recorded in the source ratings 206. The source ratings 206 may be taken into account in determining whether specific content items are to be included in a respective printed publication 163 as will be discussed. Also stored in the databases 199 are advertisements 209 and content items 213. The advertisements 209 and content items 213 may be, for example, articles, pictures, images, web pages, or other content. The use and operation of the various components on the memory 176 will be discussed in greater detail with reference to the operation of the publishing network 100.

The reference server 109 also includes a processor circuit having a processor to 223 and a memory 226, both of which are coupled to a local interface 229. The local interface 229 may be, for example, a data bus with an accompanying control/address bus as can be appreciated by those with ordinary skill in the art. In this respect, the reference server 109 may comprise, for example, a computer system or other system with like capability. The reference server 109 may also employ the peripheral devices as were described with reference to the client 103 above. The reference server 109 includes server logic 233 that performs the same functions as the server logic 183 in the publishing server 106. The reference server 109 also includes a reference mapper 236 that maps various ephemeral interest information that is obtained from the document 159 or input by a user to predefined ephemeral interest references as will be described. In this respect, the reference mapper 236 may include, for example, a database or other associative data structure.

The content server 113 of the publishing network 100 also includes a processor circuit with a processor 243 and a memory 246, both of which are coupled to a local interface 249. The local interface 249 may be, for example, a data bus with an accompanying control/address bus as can be appreciated by those with ordinary skill in the art. In this respect, the content server 113 may be, for example, a computer system or other system with like capability. The content server 113 may also employ the peripheral devices as were described with reference to the client 103 above. The content server 113 also includes server logic 253 that performs the same functions as the server logic 183 in the publishing server 106 and the server logic 233 in the reference server 109.

Additional content items 213 may be stored in the content server 113 and served up to client devices 103 or other servers as requested by the server logic 253. In this respect, the content items 213 stored in the content server 113 are similar in nature to the content items 213 that are stored in the publishing server 106.

Each of the memories 126, 176, 226, and 246 is defined herein as both volatile and nonvolatile memory and data storage components. Volatile components are those that do not retain data values upon loss of power. Nonvolatile components are those that retain data upon a loss of power. Thus, each of the memories 126, 176, 226, and 246 may comprise, for example, random access memory (RAM), read-only memory (ROM), hard disk drives, floppy disks accessed via an associated floppy disk drive, compact discs accessed via a compact disc drive, magnetic tapes accessed via an appropriate tape drive, and/or other memory components, or a combination of any two or more of these memory components. In addition, the RAM may comprise, for example, static random access memory (SRAM), dynamic random access memory (DRAM), or magnetic random access memory (MRAM) and other such devices. The ROM may comprise, for example, a programmable read-only memory (PROM), an erasable programmable read-only memory (EPROM), an electrically erasable programmable read-only memory (EEPROM), or other like memory device.

Also, each of the processors 123, 173, 223, and 243 may represent multiple processors and each of the memories 126, 176, 226, and 246 may represent multiple memories that operate in parallel processing circuits, respectively. In such a case, each of the local interfaces 129, 179, 229, and 249 may be an appropriate network that facilitates communication between any two of the multiple processors, between any processor and any of the memories, or between any two of the memories, *etc*. Each of the processors 123, 173, 223, and 243 may be electrical or optical in nature.

Also, the client 103, publishing server 106, reference server 109, and the content server 113 each include an appropriate operating system that is executed to control the allocation and usage of resources such as the memory, processing time, and peripheral devices. In this manner, the operating systems serve as the foundation on which applications depend as is generally known by those with ordinary skill in the art.

In addition, although the various systems and components are shown in FIG. 1 as being stored and executed in the client 103, publishing server 106, reference server 109, and the content server 113, it is understood that such systems and components may be located in other servers or devices in an alternative arrangement that performs similar functionality to the publishing network 100. For example, all of the systems and components that reside in the publishing server 106 may be stored and executed in the client 103 and vice versa, *etc*. Also, although not shown, the functionality of each of the systems and components may be distributed among multiple servers or devices.

Next, the operation of the publishing network 100 in providing the printed publication 163 to a user based upon ephemeral interests is discussed. The operation of the publishing network 100 is described in the context of a traveler who wishes to purchase a printed publication 163 to be read on an airplane that is specific to the ephemeral interests of the traveler for a particular trip. Specifically, the printed publication 163 would include content that discusses the destination of the traveler such as sites to see, restaurants in the town, or other information. In this respect, the user may have an itinerary that serves as the document 159 that includes the travel destinations, hotel accommodations, rental car accommodations, and perhaps other information about the traveler.

In the airport, the client 103 may be contained within a kiosk, booth or other structure that is accessible to the public. The traveler approaches the kiosk and by manipulation of appropriate user input devices causes the document 159 to be scanned by the scanner 139. Thereafter, the point of publication system 153 determines whether one or more ephemeral interests may be identified on the document 159. In the case of our traveler, the ephemeral interests might be the destination city, hotel accommodations, rental car arrangements, or other information. Alternatively, the traveler may enter the ephemeral interests manually by manipulating an appropriate user interface, *etc*.

Alternatively, the point of publication system 153 may identify an ephemeral interest reference on the document 159 that is employed to find corresponding ephemeral interests. The ephemeral interest reference may be entered manually as well. Specifically, in the case that the document 159 were the itinerary of the traveler. An appropriate ephemeral interest reference may be, for example, a confirmation number associated with the flight reservations on the document 159. Such a confirmation number may be employed to obtain the specific ephemeral interests from a reference mapper 236 located in a server, for example, at a travel agency, *etc*.

An "ephemeral interest" is defined herein as an interest that is of value for a respective individual for a short or finite period of time, after which such an interest ceases to be of concern. For example, while our traveler anticipates the trip, is enroute to the destination, or has arrived at the destination city, the interests obtained from the travel itinerary are ephemeral interests relating to the trip. However, once our traveler has returned home from their destination, the restaurants, hotels, and other activities located at the former destination city may cease to be of significant interest.

Other ephemeral interests might include, for example, an interest in one time events such as, for example, sporting event, a trip to a movie, theatrical production, or other events that occur at a specified period of time for which a user might wish to obtain a publication that includes content items related to the interests. Still other ephemeral interests might be interests in official proceedings such as, for example, a meeting of a particular group or society, a trial in court, or congressional hearing, *etc*.

For those situations where the ephemeral interests cannot be obtained directly from the document 159, the ephemeral interest reference is obtained therefrom. The ephemeral interest reference is ultimately mapped to specific ephemeral interests in a separate database or other location. In such cases, the point of publication system 153 may generate a request that is transmitted to a predetermined reference server 109 for ephemeral interests that are associated with a respective ephemeral reference obtained from the document 159. Such may be the case, for example, where our traveler has incomplete itinerary information on a document 159 but can reference the full itinerary at a specific database created by a travel agent. The reference server 109 responds to the request by transmitting the corresponding ephemeral interests found in the reference mapper 236 back to the point of publication system 153.

Regardless of whether the ephemeral interests are obtained directly from the document 159 or the reference server 109, the point of publication system 153 then asks our traveler to enter a relative weight that is afforded to the ephemeral interests in generating a personalized publication therefrom. To explain further, maintained in an appropriate database 199 in the publishing server 106 is a user profile 203 that is associated with our traveler. As stated previously, the user profile 203 includes biographical information, interests and hobbies, *etc*.*,* associated with our traveler. The information included in the user profile 203 is entered into the publishing server 106 on a prior occasion using an appropriate user interface as will be described. This information in the personal profile 203 is defined herein as "enduring interests" that are maintained over the long term. The enduring interests might be changed by the traveler in response to changes in their living condition such as a change of address, *etc.,* however, the enduring interests generally are not short lived like the ephemeral interests. In this regard, the enduring interests may be distinguished from the ephemeral interests in that they are stored long term in the user profile 203, whereas ephemeral interests are not stored in this manner and may be employed only to generate a single publication 266.

Ultimately, the publishing system 186 obtains content items 213 for the printed publication 163 taking the relative weight into account. Specifically, in obtaining content items 213 for a resulting publication, searches may be performed through various content items 213 based upon both the ephemeral interests received in the publication request 263 as well as the enduring interest from the user profile 203. Given that a predefined number of content items 213 may be included in the printed publication 163, the relative weight informs the publishing system 186 of a proportionality between the content items 213 relating solely to the ephemeral interests and those that relate to the enduring interests that are to be included in the resulting publication. Alternatively, a non-numerical value may be submitted as the relative weight that specifies that the printed publication 163 is to be populated by content items 213 relating to both the ephemeral and enduring interests. The relative weight might be entered into the client 103 by a user using an appropriate input device 136 such as a keyboard, key pad or other appropriate device as can be appreciated by those with ordinary skill in the art. Alternatively, the relative weight may be entered and maintained in the respective user profile 203 by the traveler, *etc.*

Also, the traveler is prompted to enter a user identifier or account number into the client 103 by way of an appropriate input device. Alternatively, the user identifier may be the traveler's name, for example, that is obtained directly from the document 159.

After the relative weight and user identifier are entered, the point of publication system 153 then creates a publication request 263 that is transmitted to the publishing server 106. The publication request 263 includes the ephemeral interests obtained from either the document 159 or the reference server 109 as well as the relative weight that is to be afforded to the ephemeral interests in determining the precise content items 213 that are to be included in a resulting printed publication 163. The publication request 263 also includes the user identifier associated with the traveler.

When the publication request for 263 is received by the publishing server 106, the publishing system 186 proceeds to generate the publication 266. In doing so, the publishing system 186 may perform one or more searches through the content items 213 that are stored locally on the publishing server 106 as well as content items 213 that are stored on remote content servers 113 coupled to the network cloud 116. Such a search is performed to find content items 213 that relate to the ephemeral interests and the enduring interests or both as is appropriate. Specifically, a combination search may be performed to find content items 213 that relate to both the ephemeral interests and the enduring interests. Alternatively, separate searches may be conducted to find content items 213 that relate to the ephemeral interests and the enduring interests, respectively.

The publishing system 186 thus performs the search for appropriate content items 213 that are related to the respective ephemeral and enduring interests of the traveler and obtains a pool of content items 213. The publishing system 186 then decides which of those identified content items 213 are to be employed in the resulting publication 266 based upon the relative weight supplied by the user. Thereafter, the publishing system 186 employs the page layout engine 189 or equivalent system to generate a digital representation of the publication 266 to be transmitted to the client 103. For an examples of the operation of various publishing systems, reference is made to United States Patent Application entitled "Document Delivery System for Automatically Printing a Document on a Printing Device", Serial Number 09/325,040, filed on June 7, 1999, and United States Patent Application entitled "System and Method for Generating and Distributing a Publication", Serial Number 09/915,982, filed on July 25, 2001, both such patent applications being incorporated herein by reference.

While generating the publication 266, the publishing system 186 may include various advertisements 209 from database(s) 199 that are specifically directed to the ephemeral and/or enduring interests of the traveler. For example, various advertisements 209 may provide coupons for restaurants that are located in the destination city of the traveler and are within a short distance from the traveler's hotel. Thus, the present invention provides for very directed advertising and effectiveness in advertising in the printed publication 163 for the user. As a consequence, the printed publication 163 generated using the publishing network 100 provides enhanced value to potential advertisers over conventional publications. This translates into a more reliable source of revenue for those who operate the publishing network 100. Specifically, advertisers are provided with an ability to target those specific individuals for which their products or services are most directed related.

After the publication 266 has been generated, the publishing server 106 transmits the publication 266 that includes the appropriate content items 213 to the client 103 for printing. Also, a copy of the publication 266 may be stored in the publication archives 269 for future reference. A unique publication identifier is associated with the publication 266 and the printed publication 163 so that the copy of the publication 266 stored in the publication archives 269 may be identified at a later time. When the publication 266 is received in the client 103, the point of publication system 153 causes the printing of the publication 266 on the printer 143, thereby resulting in the printed publication 163 that is provided to the traveler.

When the publishing system 186 generates the publication 266 for transmission to the client 103, appropriate book keeping entries are added to the account tracking system 196 so that our traveler may be billed for the printed publication 163. The precise account to which the printing of the publication 266 is charged is identified from the user identifier.

Additionally, it may be the case that the traveler would want to provide feedback as to how much they liked the various content items 213 in the printed publication 163. The feedback might relate to the specific content item or may relate to the source of the content item ("content item source"). To provide such feedback, the traveler may access a feedback form relating to the printed publication 163 that is displayed on the display device 133 to enter feedback relative to the content items 213. In such case, such a form is generated by the feedback system 193 and transmitted to the client 103 for display on the display device 133 in response to a user's request. The user would identify the publication based upon the issue number and/or their personal account number, a unique publication identifier, or other identification information, *etc*. The feedback system 193 then obtains the respective publication stored in the publication archives 269 and generates the feedback form based upon the content items 213 included in the printed publication 163. The feedback form is then sent to client 103 to be viewed by our traveler. The traveler may then manipulate the various input devices 136 to indicate their feedback regarding the content items 213 accordingly. The feedback 273 is then sent back to the publishing server 106 and is appended to the source ratings 206 of the user's profile 203.

The publication feedback 273 may take many different forms and may be directed to both a specific content item 213 or a respective content item source that generated the content item 213. A content item source may be, for example, a particular author, columnist, or organization that created the respective content item 213. In this respect, the publication feedback 273 may embody a desire that content items generated by a respective content item source always be included in a publication 266 whenever found. Alternatively, the publication feedback 273 may embody a desire that content items generated by a respective content item source always be excluded from publications 266 when found. The feedback may include one value from a range of values that indicates a degree of enjoyment that a reader obtained from reading an article from a particular content item source. The degree of enjoyment may be employed in deciding whether future content items 213 from the same content item source are included in future publications 266. The publishing system 186 may thus take the source ratings 206 into account when selecting future content items 213 to be included in a respective publication 266 to be sent to a client 103 for printing.

In addition, the publication feedback 273 may also be entered by scanning a feedback sheet from the printed publication 163 that was filled out by hand by the traveler. Specifically, the feedback sheet may be included with the publication 266 that includes various fields and/or indicators, *etc.* To provide feedback, the user may fill out the feedback sheet associated with the publication and scan it using the scanner 139 of the client 103. Upon recognizing the feedback sheet (in digital form), the point of publication system 153 transmits it to the publishing server 106. In this regard, the feedback sheet may include indicia that informs the point of publication system 153 that in fact, it is a feedback sheet in the first place. Upon receiving the feedback sheet, the feedback system 193 records that feedback included therein in the source ratings 206 of the user profile 203 of the traveler for future reference. In order that the respective user profile 203 may be determined into which the feedback is to be recorded, the feedback sheet includes the user account number and/or the unique publication identifier, *etc*.

In yet another alternative, the feedback may be provided by the traveler over the telephone. Specifically, the feedback system 193 may provide for a menu-driven telecommunications interface that can be manipulated by various users via a telecommunications network included in the network cloud 116.

By virtue of the feedback system 193, the content of subsequent publications 266 may be fine tuned to cater to the tastes of the traveler. Specifically, even though a particular author or columnist consistently produces content items 213 that are relevant to the ephemeral interests and enduring interests of the traveler, such content items 213 may be excluded from the publications 266 generated for the traveler as the traveler evidenced a desire not to read that author's work. Such may be the case, for example, where the traveler dislikes the author's style, point of view, or for other reasons. The opposite is true for content items 213 for which the traveler has provided positive feedback. Over time, the development and use of the source ratings 206 in generating publications thus ensures that the traveler is exposed to content items 213 that the traveler will appreciate and that no room in the publications 266 is wasted on content items 213 that the traveler does not want to see.

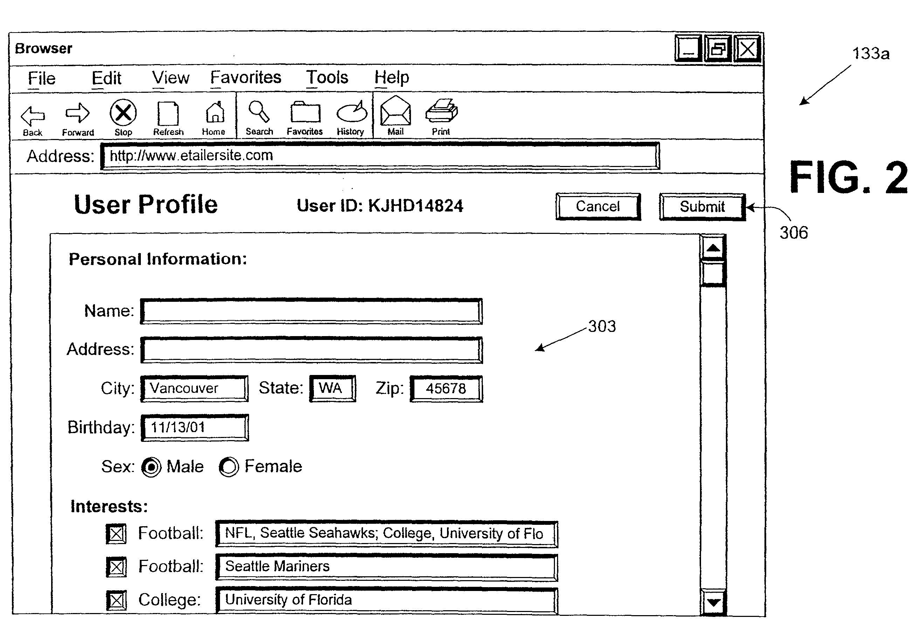

With reference to FIG. 2, shown is a graphical user interface 133a that is rendered on the display device 133 (FIG. 1) to allow a user to input their enduring interests for storage in the respective user profile 203 (FIG. 1) in the publishing server 106 (FIG. 1). In this respect, the graphical user interface 133a is generated by the browser 156 (FIG. 1) and includes a profile form 303 with a number of fields that may be filled in or otherwise manipulated by the user. By adding information and modifying information in the profile form 303 and then submitting the profile form to the publication server 106, a user may create or alter a specific user profile 203 stored in the memory 176. In order to submit the information entered into the profile form 303, the user may click on the "submit" button 306. The act of "clicking" on a particular article within a graphical user interface as contemplated herein involves positioning a cursor over the item by manipulating a mouse, trackball, touch pad, or other input device 136, *etc.,* and pressing a button thereon as can be appreciated by those with ordinary skill in the art.

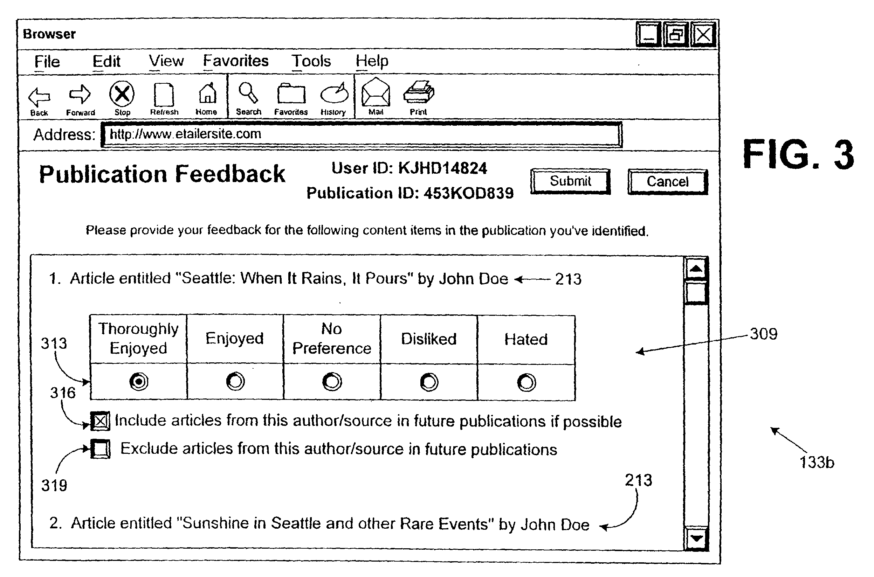

Referring next to FIG. 3, shown is a second graphical user interface 133b that is generated and displayed by the browser 156 (FIG. 1) in accessing a feedback form 309 generated by the feedback system 193 (FIG. 1). In this respect, a feedback form 309 may be created using, for example, hypertext markup language, extensible markup language, or other markup language as can be appreciated by those with ordinary skill in the art. In addition, other appropriate languages beyond markup languages may be employed. The feedback form 309 lists content items 213 (FIG. 1) that were included in a predefined publication 266 (FIG. 1). For each of the content items 213 that are listed, a corresponding range of preference selections, such as preference selections 313, is provided that may be manipulated by a user to indicate whether they either thoroughly enjoyed, enjoyed, have no preference, disliked, or hated the respective content items 213. Also, other categories may be employed beyond those listed in the preference selections 313.

Also associated with each of the content items 213 is an inclusion indicator 316 and an exclusion indicator 319. The user may click on either the inclusion or exclusion selectors 316 or 319 to indicate that respective content items 213 from associated content item sources such as specific authors or organizations are to be included or excluded from future publications accordingly. In this manner, a user may prevent content items 213 that were created by content item sources that they particularly disliked from being included in future publications 266 (FIG. 1) that the user may order in the future. In interfacing with the feedback system 193 in order to obtain access to the feedback form 309, a user may navigate through one or more screens using the browser 156 (FIG.1) that provide for authentication of the user and identification of the publication 266 for which the user wishes to provide feedback, *etc.* To identify the publication 266, the user may supply the unique publication identifier associated with the publication 266 for which feedback is to be provided. The feedback system 193 may then search the publication archive 269 to find the respective publication and employ the information included therein to generate the feedback form 309 that is then transmitted to the client 103.

When the user has completed filling out the feedback form 309 on the graphical user interface 133b, then the user may click on the submit button and the publication feedback 273 is then sent to the feedback system 193 where it is ultimately included in the source ratings 206 and other feedback information stored in the respective user profile 203.

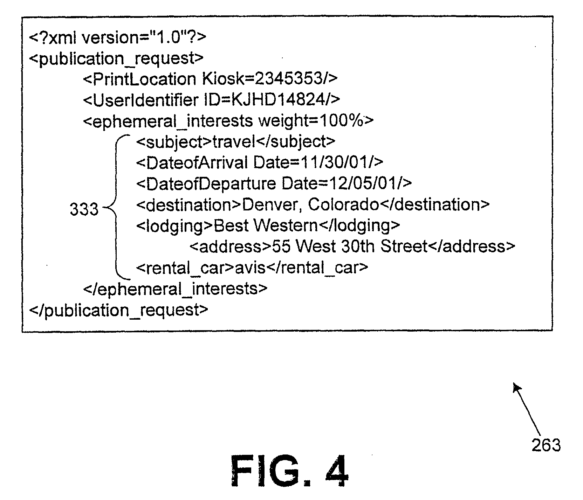

Turning then to FIG. 4, shown is an example of the publication request 263 according to an embodiment of the present invention. The publication request 263 is embodied in Extensible Markup Language (XML), however, other markup languages or programming languages may be employed as can be appreciated by those with ordinary skill in the art. The publication request 263 includes a number of ephemeral interests that may be obtained, for example, from the document 159 (FIG.1) that may be the travel itinerary discussed previously. In this respect, the exemplary ephemeral interests 333 include an indication that the interest is related to travel, the date of arrival, date of departure, the destination, the hotel accommodations, and rental car accommodations, *etc*. The ephemeral interests 333 may include information other than that depicted in FIG. 4, where the travel information is provided as an example.

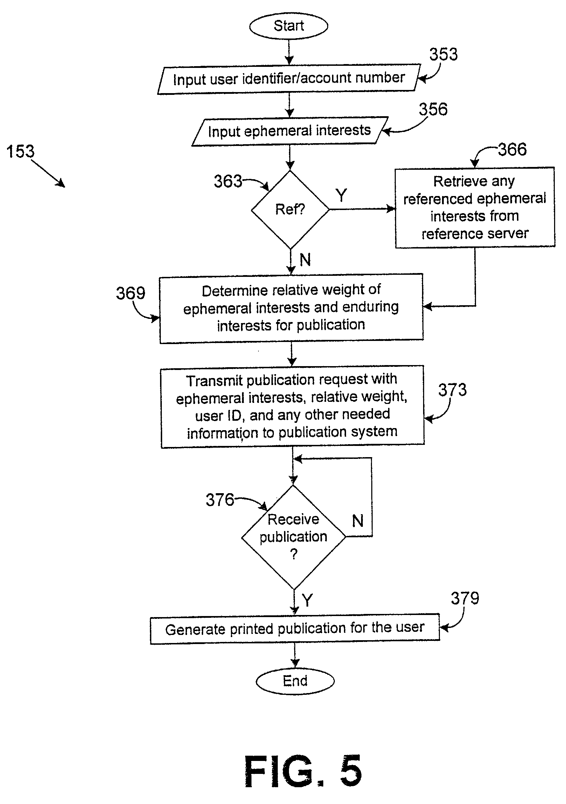

With reference to FIG. 5, shown is a flow chart of the point of publication system 153 according to an embodiment of the present invention. Alternatively, the flow chart of FIG. 5 may be viewed as depicting steps of a method implemented in the client 103 (FIG. 1) in generating the printed publication 163 (FIG. 1) for the user. The point of publication system 153 may be created using any one of a number of computer languages such as, for example, C++, Java, JavaScript, or other scripting and programming languages. Beginning with block 353, the point of publication system 153 obtains user input in terms of a user identifier or account number, etc. The user identifier/account number may be used to authenticate the user with regard to the publishing system 186 (FIG. 1). Thereafter, in box 356, the point of publication system 153 inputs the appropriate ephemeral interests. This may be done by scanning the document 159 (FIG.1) using the scanner 139 (FIG. 1) and parsing the content thereon to find the ephemeral interests contained therein. Alternatively, appropriate graphical user interfaces may be displayed on the display device 133, for example, that allow the user to manually enter the ephemeral interests.

Then, in box 363, the point of publication system 153, determines whether an ephemeral reference has been obtained from the document 159 that requires retrieval of associated ephemeral interests from a reference server 109 or other device. If so, then the point of publication system 153 proceeds to box 366 in which the ephemeral interests are retrieved from the reference server 109 based upon the ephemeral reference obtained in box 359. If there is no ephemeral reference in box 363 or if the ephemeral interests have been retrieved in box 366, then the point of publication system 153 proceeds to box 369 in which a relative weight between the ephemeral interests and the enduring interests is determined. the relative weight is employed to guide the publishing system 186 in obtaining content items 213 (FIG. 1) to be employed in generating a resulting publication 266 (FIG. 1). The relative weight may be input by the user using an appropriate input device 136 (FIG. 1). The relative weight may be, for example, a percentage value for the percentage of content items 213 that relate solely to the ephemeral interests, whereas the remaining portion on content items 213 may take the enduring interests into account in addition to the ephemeral interests. Note that a second value such as a "yes" or "no" may be included that indicates whether the remaining portion of content items 213 is to relate to only the enduring interests or to both the enduring and ephemeral interests, *etc.* Ultimately, the relative weight(s) or values provide guidance to the publishing system 186 in selecting content items 213 for the publication 266. Where no relative weight or other value is specified, one or more default values may be assumed such as, for example, a value that indicates that all content items 213 are to relate solely to the ephemeral interests or to both the ephemeral and enduring interests, *etc.*

Then, in box 373, the publication request 263 that includes the ephemeral interests, relative weight(s) or other values, user identifier and any other needed information is generated and transmitted to the publishing server 106 to request the corresponding publication 266. Then, in box 376, the point of publication system 153 waits to receive the publication 266 from the publishing server 106. If an excessive amount of time transpires between the time that the publication request 263 was transmitted without receiving the publication 266, then the point of publication system 153 may assume that an error has occurred and may generate an indication for the user on the display device 133 accordingly. At such time, the attempt to create the printed publication 163 may be halted or restarted.

Assuming that the publication 266 is received from the publishing server 106, then the point of publication system 153 proceeds to box 379 to generate the printed publication 163 therefrom. Thereafter the point of publication system 163 ends accordingly.

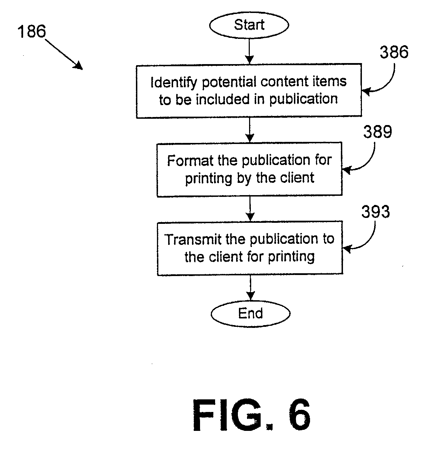

With reference to FIG. 6, shown is a flow chart that provides an overview of the operation of the publishing system 186. Alternatively, the flow chart of FIG. 6 may be viewed as depicting steps in a method implemented in the publishing server 106 (FIG. 1). The publishing system 186 is implemented upon receipt of a properly formatted publication request 263 (FIG. 1). Beginning with box 386, the publishing system 186 identifies potential content items 213 (FIG. 1) that are to be included in the publication 266 (FIG. 1) to be transmitted to the client 103 (FIG. 1). At least some or all of the content items 213 identified convey information associated with the ephemeral interests that are supplied to the publication system 186 in the publication request 263. The content items 213 may be subjected to filtering functions based upon the source ratings 206, *etc*., to determine whether they are to be included in the publication 266 as will be discussed.

Once the content items 213 to be included in the publication 266 are identified, then in box 389 the publishing system 186 generates or otherwise formats the publication 266 for printing by the client 103. In doing so, the publishing system 186 may employ the page layout engine 189 or other suitable layout system. Once the publication 266 is properly formatted for printing by the client 103, then in box 393 the publishing system 186 transmits the publication 266 to the client 103 for printing.

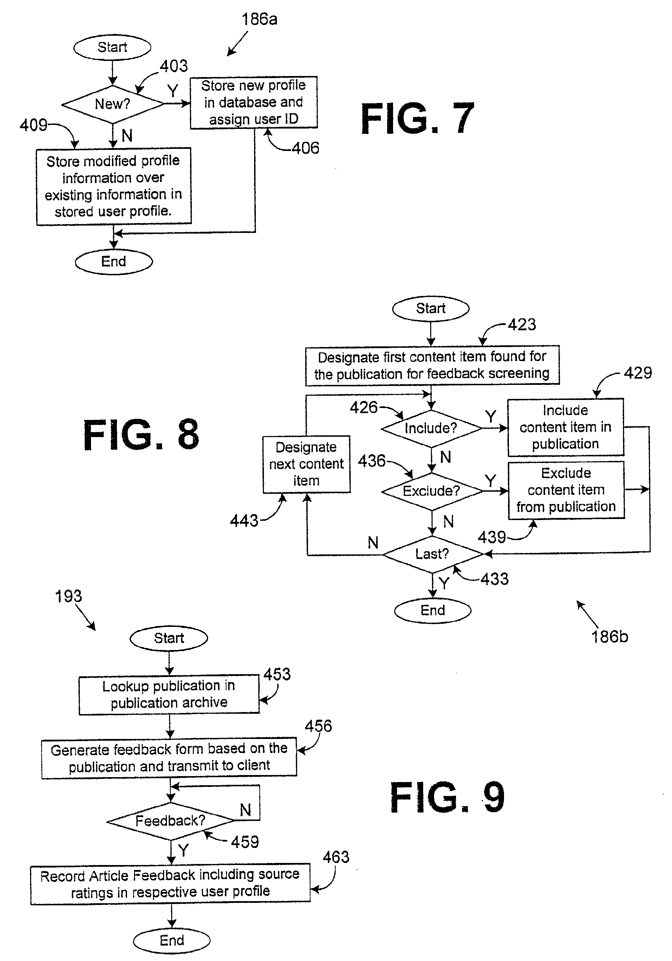

With reference to FIG. 7 shown is a flow chart of a user profile maintenance component 186a of the publishing system 186 (FIG. 1) according to an embodiment of the present invention. Alternatively, the flow chart of FIG. 7 may be viewed as depicting steps in a method implemented in the publishing server 106 (FIG. 1). The user profile maintenance component 186a is executed in order to create and/or update a user profile 203 (FIG. 1). The user profile maintenance component 186a may be implemented as a servlet or other programming entity using any one of a number of appropriate programming languages such as, for example, those listed with respect to the point of publication system 153 (FIG. 5) above as can be appreciated by those with ordinary skill in the art.

Beginning with box 403, the user profile maintenance component 186a determines whether a new user profile 203 has been received from the client 103. A new user profile 203 is created when a user accesses the graphical user interface 133a (FIG. 2), enters the appropriate information, and then clicks on the submit button 306 (FIG. 2) so transmit the profile information to the publishing system 186 or other system that maintains the user profiles 203. If such is the case, then the user profile maintenance component 186a proceeds to box 406 in which the new user profile 203 is stored in the database 199 with other user profiles 203 (FIG. 1). During the creation of a new user profile 203, a user identifier is associated therewith. Thereafter, the user profile maintenance component 186a ends accordingly.

With reference back to box 403, if the user profile received from the client 103 is not a new profile but includes modifications to an existing profile, then the user profile maintenance component 186a proceeds to box 409. Whether a received user profile 203 is new may be determined by searching through the user profiles 203 stored in an appropriate database 199 (FIG. 1) to identify whether a prior user profile 203 exists for the respective user. Specifically, if a user accesses their previously stored user profile 203, a user identifier/account number is already assigned thereto. Consequently, the modified user profile 203 includes the user identifier/account number. Assuming that the user profile 203 of the respective user is to be modified, then in box 409 the modified profile from the profile form 303 is stored over the existing user profile 203 in the database 199. Thereafter, the user profile maintenance component 186a ends.

With reference to FIG. 8, shown is a content item screening component 186b of the publishing systems 186 that is implemented to screen content items 213 from being included in the publication 266 based upon the source ratings 206 and other feedback information associated with the respective user profile 203. In this respect, the content item screening component 186b may be, for example, a subroutine, object, or other encapsulation of the functionality contained therein. Also, the content item screening component 186b may be created using an appropriate computer language such as those listed with reference to the point of publication system 153 (FIG. 5). Alternatively, the flow chart of FIG. 8 may be viewed as depicting steps in the method implemented in the publishing server 106.

Beginning with box 423, the content item screening component 186b designates a first content item 213 that can be potentially included in the publication 266 for screening against the feedback contained in the respective user profile 203. Thereafter, in box 426, the content item screening component 186b determines whether the current content item 213 is to be automatically included in the publication 266. This would be due to the fact that the user has specified that all content items 213 from the respective content item source of the content item 213 be included by marking the inclusion selector 316 (FIG. 3) on a previous feedback form 309. If such is the case, then the content item screening component 186b proceeds to box 429 in which the respective content item 213 is automatically included in the publication 266. Thereafter, the content item screening component 186b proceeds to box 433.

However, if in box 426 the currently designated content item 213 is not to be automatically included in the publication 266, then the content item screening component 186b proceeds to box 436. In box 436 it is determined whether the currently designated content item 213 is to be automatically excluded from the publication 266. This may be ascertained based upon a user input from a previous feedback form 309 that indicates that articles from the respective content item source are to be excluded as the user had previously manipulated the exclusion selector 319 with regard to that content item source. If such is the case, then the publishing system proceeds to box 439 in which the content item 213 is excluded from the publication 266.

Thereafter the content item screening component 186b proceeds to box 433. In box 433, the content item screening component 186b determines whether the last potential content item 213 that might be included in the publication 266 has been screened based upon the source ratings 206 and other feedback contained in the respective user profile 203. If so, then the content item screening component 186b proceeds to box 443 in which the next content item 213 is designated for evaluation. Thereafter the content item screening component 186b reverts back to box 426 as shown.

In addition to the forgoing, the screening of the content items 213 in light of the feedback contained the respective user profile 203 may employ the preference selections 313 in determining whether respective content items 213 are to be included in the publication 266.

With reference to FIG. 9, shown is a flow chart of the feedback system 193 according to an embodiment of the present invention. Alternatively, the flow chart of FIG. 9 may be viewed as depicting steps of a method implemented in the publishing server 103 (FIG. 1) in obtaining user feedback with regard to the publication 266 (FIG. 1) that are generated based upon ephemeral interests. The feedback system 193 may be created using an appropriate programming language such as those listed with reference to the point of publication system 153 (FIG. 5) above.

First, assume that a user manipulates the browser 156 to interface with the feedback system 193 to indicate a specific publication 266 for which they wish to provide feedback. Then, in box 453, the feedback system 193 looks up the respective publication 266 stored in the publication archive 269 (FIG. 1). This assumes that the user provides the publication number to the feedback system 193 using an appropriate graphical user interface displayed on the display device 133 and by manipulating appropriate input devices 136, *etc.* Once the publication is obtained from the publication archive 269, then the feedback system 193 proceeds to box 456 in which the feedback form 309 is generated based upon the publication 266 retrieved from the publication archive 269. The feedback form 309 is then transmitted to the client 103 and displayed in the graphical user interface 133b (FIG. 3) by the browser 156 (FIG. 1) in the client 103 (FIG. 1).

Thereafter, in box 459 the feedback system 193 waits to receive the completed feedback form 309 from the client 103. Alternatively, where the user has filled out a printed feedback form included in the printed publication 163, then the feedback information may be scanned using the scanner 139 and is transmitted from the client 103 to the publishing server 106 and received by the feedback system 193. In such case, there is no need to look up the publication 266 in the publication archive 269 as such information is already included in the printed feedback form. At such time the feedback system 193 need only proceed to box 463. However, assuming that the feedback system waits to receive the user feedback form 309 in box 459, then when such feedback form 309 is received, the feedback system 193 proceeds to box 463. In box 463, the feedback is recorded as the source ratings 206 and other information in the respective user profile 203. Thereafter, the feedback system 193 ends accordingly.

Although the point of publication system 153, the various components of publishing system 186, the feedback system 193, and databases 199 of the present invention are embodied in software or code executed by general purpose hardware as discussed above, as an alternative each may also be embodied in dedicated hardware or a combination of software/general purpose hardware and dedicated hardware. If embodied in dedicated hardware, each can be implemented as a circuit or state machine that employs any one of or a combination of a number of technologies. These technologies may include, but are not limited to, discrete logic circuits having logic gates for implementing various logic functions upon an application of one or more data signals, application specific integrated circuits having appropriate logic gates, programmable gate arrays (PGA), field programmable gate arrays (FPGA), or other components, etc. Such technologies are generally well known by those skilled in the art and, consequently, are not described in detail herein.

The flow charts of FIGS. 5-8 show the architecture, functionality, and operation of an implementation of the point of publication system 153, the various components of publishing system 186, the feedback system 193, and databases 199. If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor in a computer system or other system. The machine code may be converted from the source code, *etc.* If embodied in hardware, each block may represent a circuit or a number of interconnected circuits to implement the specified logical function(s).

Although the flow charts of FIGS. 5-8 show a specific order of execution, it is understood that the order of execution may differ from that which is depicted. For example, the order of execution of two or more blocks may be scrambled relative to the order shown. Also, two or more blocks shown in succession in FIGS. 5-8 may be executed concurrently or with partial concurrence. In addition, any number of counters, state variables, warning semaphores, or messages might be added to the logical flow described herein, for purposes of enhanced utility, accounting, performance measurement, or providing troubleshooting aids, etc. It is understood that all such variations are within the scope of the present invention. The block diagrams and/or flow charts of FIGS. 1, and 5-8 are relatively self-explanatory and are understood by those with ordinary skill in the art to the extent that software and/or hardware can be created by one with ordinary skill in the art to carry out the various logical functions as described herein.

Also, where the point of publication system 153, the various components of publishing system 186, the feedback system 193, and databases 199 comprise software or code, each can be embodied in any computer-readable medium for use by or in connection with an instruction execution system such as, for example, a processor in a computer system or other system. In this sense, each may comprise, for example, statements including instructions and declarations that can be fetched from the computer-readable medium and executed by the instruction execution system. In the context of the present invention, a "computer-readable medium" can be any medium that can contain, store, or maintain the point of publication system 153, the various components of publishing system 186, the feedback system 193, and databases 199 for use by or in connection with the instruction execution system. The computer readable medium can comprise any one of many physical media such as, for example, electronic, magnetic, optical, electromagnetic, infrared, or semiconductor media. More specific examples of a suitable computer-readable medium would include, but are not limited to, magnetic tapes, magnetic floppy diskettes, magnetic hard drives, or compact discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

Although the invention is shown and described with respect to certain preferred embodiments, it is obvious that equivalents and modifications will occur to others skilled in the art upon the reading and understanding of the specification. The present invention includes all such equivalents and modifications, and is limited only by the scope of the claims.

## Claims

1. A method for generating a publication (163), comprising:
inputting an ephemeral interest (333) into a client (103), wherein the ephemeral interest (333) is of use in identifying at least one content item (213) to be included in the publication (163);
requesting the publication (163) based at least in part upon the ephemeral interest (333) from a publication system (186); and
printing out the publication (163) received from the publication system (186), the publication (163) including the at least one content item (213).

2. The method of claim 1, wherein the inputting of the ephemeral interest (333) into the client (103) further comprises:
inputting an ephemeral interest reference into the client (103); and
obtaining the ephemeral interest (333) from a reference mapper (236) based upon the ephemeral interest reference.

3. The method of claim 1, wherein the inputting of the ephemeral interest (333) into the client (103) further comprises:
scanning a document (159) to obtain a digital representation thereof; and
parsing an amount of data in the digital representation of the document (159) to identify the ephemeral interest (333) included therein.

4. The method of claim 1, wherein the inputting of the ephemeral interest (333) into the client (103) further comprises entering the ephemeral interest (333) into the client (103) using an input device (136).

5. A system for generating a publication (163), comprising:
means for inputting an ephemeral interest (333), wherein the ephemeral interest (333) is of use in identifying at least one content item (213) to be included in the publication (163);
means for generating a request for the publication (163) based at least in part upon the ephemeral interest (333) from a publication system (186), wherein the request is to be applied to the publication system (186); and
means for executing a printing of the publication (163) received from the publication system (186), the publication (163) including the at least one content item (213).

6. A method for generating a publication (163), comprising:
identifying a number of content items (213) to be included in the publication (163), wherein at least some of the content items (213) convey information associated with an ephemeral interest (333);
formatting the publication (163) for printing by a client (103); and
transmitting the publication (163) to the client (103) for printing.

7. The method of claim 6, wherein the identifying of the number of content items (213) to be included in the publication (163) further comprises performing a search among a number of potential content items for the content items (213) that convey the information associated with the ephemeral interest (333).

8. The method of claim 6, further comprising maintaining a user profile (203) that includes a number of source ratings (206) associated with a corresponding number of content item sources.

9. The method of claim 8, further comprising adding a new one of the source ratings (206) to the user profile (203) based upon a content item feedback received from a client (103).

10. The method of claim 8, further comprising determining whether a content item (213) is to be excluded from the publication (163) based upon a content item source rating associated with the content item (213).

11. A system for generating a publication (163), comprising:
means for identifying a number of content items (213) to be included in the publication (163), wherein at least some of the content items (213) convey information associated with an ephemeral interest (333);
means for formatting the publication (163) for printing by a client (103); and
means for transmitting the publication (163) to the client (103) for printing.
